# FASCICULE DE BREVET EUROPEEN

(11) **EP 2 843 595 B1**
(45) Date de publication et mention de la délivrance du brevet: **12.09.2018**
(21) Numéro de dépôt: 14178966.9
(22) Date de dépôt: 29.07.2014
(51) Int. Cl.: G06K 19/077

(54) **Adaptateur pour carte à microcircuit entre un grand format et un petit format de moindre épaisseur**
Adapter für Mikroschaltkreiskarte zwischen einem Großformat und einem Kleinformat kleinstmöglicher Dicke
Adapter for chip card between a large format and a small, thinner format

(30) Priorité: 09.08.2013 FR 1357934
(43) Date de publication de la demande: 04.03.2015
(73) Titulaire: IDEMIA France, 92700 Colombes (FR)
(72) Inventeur: Samaran, Marion, 92700 COLOMBES (FR); Simmoneaux, Grégory, 92700 COLOMBES (FR); Guérard, Denis, 92700 COLOMBES (FR); Adjenbaum, Jérôme, 92700 COLOMBES (FR)
(74) Mandataire: Underwood, Nicolas Patrick

(56) Documents cités:
- WO-A1-03/027946
- FR-A1- 2 982 981

## Description

La présente invention concerne le domaine des cartes à microcircuit et plus particulièrement un adaptateur de format apte à compenser une différence d'épaisseur.

Une carte à microcircuit comprend typiquement une plaque support réalisée dans une feuille de plastique rigide. Dans un logement pratiqué dans l'épaisseur de ladite plaque est disposé un microcircuit, recouvert d'un connecteur permettant, au moyen d'un lecteur adapté, de dialoguer avec ledit microcircuit.

Une telle carte à microcircuit est utilisée comme mémoire sécurisée dans de nombreux domaines : carte bancaire, carte médicale, carte d'identité ou encore carte d'abonnement téléphonique.

Si la surface occupée par le microcircuit et son connecteur reste sensiblement constante, la surface de la plaque support l'encadrant ne cesse de se réduire afin d'accompagner la miniaturisation des équipements, tels les téléphones mobiles, utilisant de telles cartes à microcircuit.

Ainsi, dans le domaine de la téléphonie mobile par exemple, un premier facteur de forme, 1FF, comportait une plaque support rectangulaire de dimensions externes 54 x 85, 6 mm. Rapidement ce format a laissé place à un format plus réduit : 2FF, comportant une plaque support rectangulaire de dimensions externes 15 x 25 mm, assortie d'un détrompeur consistant en un coin découpé. Ce format a été suivi par un format encore plus réduit : 3FF, comportant une plaque support rectangulaire de dimensions externes 12 x 15 mm, elle aussi assortie d'un détrompeur consistant en un coin découpé. Ces formats sont définis par la norme ISO 7816.

Avec ces formats plus petits, est apparue, une carte de distribution. Une carte de distribution est une plaque support plus grande, par exemple au format 1FF, qui comprend la carte à microcircuit de format, 2FF ou 3FF, plus petit. La carte à microcircuit est alors typiquement prédécoupée afin de pouvoir être détachée, avantageusement sans outil particulier, de la carte de distribution.

Ces formats cohabitant dans le temps, il est encore connu de réaliser des adaptateurs. Ainsi un adaptateur d'un petit format, par exemple 3FF, vers un grand format, par exemple 2FF, permet de conformer une carte à microcircuit au petit format, 3FF selon un grand format, 2FF. Un tel adaptateur est réalisé dans une plaque support. Son extension est limitée par une limite externe sensiblement identique au contour du grand format et par une limite interne sensiblement identique au contour du petit format. Il est apte à accueillir une carte à microcircuit au petit format dans sa limite interne. Ledit adaptateur est avantageusement distribué avec la carte à microcircuit au sein d'une même carte de distribution. La carte à microcircuit et l'adaptateur peuvent ainsi être présenté espacés l'un de l'autre ou encore imbriqués l'un dans l'autre.

Pour ces formats, 1FF, 2FF, 3FF, l'épaisseur de la plaque support reste la même et est comprise entre 680 et 840 micromètres.

Il apparait aujourd'hui un nouveau format encore plus réduit que les précédents. Ce format, nommé 4FF, pour quatrième facteur de forme, comporte une plaque support rectangulaire de dimensions externes 8,8 x 12,3 mm, elle aussi assortie d'un détrompeur consistant en un coin découpé. Cependant, une nouveauté par rapport aux formats précédents, est que l'épaisseur de la plaque support est réduite et doit être comprise entre 600 et 700 micromètres.

Le faible recouvrement des plages de tolérance d'épaisseur, limité à 20 µm, compte tenu des tolérances de fabrication atteignables pour les matériaux plastiques typiquement utilisés, ne permet pas de réaliser une plaque support unique satisfaisant simultanément aux exigences d'épaisseur des formats antérieurs, 1FF, 2FF, 3FF et du nouveau format, 4FF.

Comme précédemment, le nouveau format 4FF est amené à cohabiter dans le temps avec les anciens formats. Il convient donc de pouvoir réaliser un adaptateur permettant de conformer une carte à microcircuit d'un petit format, tel 4FF, selon un grand format, tel 1FF, 2FF, 3FF, y compris en adaptant une différence d'épaisseur, entre une grande épaisseur d'un grand format et une petite épaisseur d'un petit format.

Il est de plus souhaité réaliser une carte à microcircuit, ainsi que son ou ses adaptateurs dans une seule et même plaque support, afin de pouvoir réaliser une carte de distribution comprenant une carte à microcircuit, ainsi que son ou ses adaptateurs, de matière.

Le problème qui se pose est alors de réaliser une plaque support comprenant au moins un adaptateur présentant une grande épaisseur et au moins une carte présentant une petite épaisseur.

Pour cela il est possible de réaliser une plaque support de grande épaisseur et de réduire l'épaisseur au droit de la carte. Alternativement il est encore possible de réaliser une plaque support de petite épaisseur et d'augmenter l'épaisseur au droit de l'adaptateur.

Si l'on retient cette dernière solution, il est connu de FR 1160655, de la même demanderesse, de réaliser un adaptateur de grande épaisseur en associant une plaque présentant une petite épaisseur avec un rehausseur d'épaisseur égale à la différence entre la grande épaisseur et la petite épaisseur.

Il apparait, que dans tous les modes de réalisation connus, le rehausseur recouvre toute la surface de l'adaptateur, soit toute la surface comprise entre le grand contour et le petit contour. Ceci semble aller de soi puisque les normes qui définissent les différents formats (1FF, 2FF, 3FF) précisent uniquement une épaisseur de carte plastique.

Au contraire, selon une caractéristique particulièrement avantageuse, le rehausseur selon l'invention ne couvre qu'une partie réduite de la surface de l'adaptateur.

L'invention a pour objet un adaptateur de format permettant de conformer une carte à microcircuit de petit format selon un grand format, le grand format présentant une forme sensiblement plane, présentant une grande épaisseur, d'extension selon ledit plan limitée par un grand contour, le petit format présentant une forme sensiblement plane, présentant une petite épaisseur, inférieure à la grande épaisseur, d'extension selon ledit plan limitée par un petit contour, inscrit dans le grand contour, ledit adaptateur comprenant une plaque sensiblement plane d'extension selon ledit plan limitée par une limite externe sensiblement identique au grand contour et par une limite interne sensiblement identique au petit contour, ladite plaque présentant une épaisseur sensiblement égale à la petite épaisseur, et l'adaptateur comprenant encore un rehausseur d'épaisseur sensiblement égale à la différence entre la grande épaisseur et la petite épaisseur, disposé parallèlement à la plaque, le rehausseur comprenant au moins un plot, disposé de manière à couvrir les sommets d'un triangle inscrit dans le grand contour et de surface sensiblement maximale, sur une première face de la plaque.

Selon une autre caractéristique, ledit au moins un plot est disposé à distance tant du grand contour que du petit contour.

Selon une autre caractéristique, ledit adaptateur comprend encore au moins un autre plot, disposé de manière à couvrir les sommets d'un triangle inscrit dans le grand contour et de surface sensiblement maximale, sur une deuxième face de la plaque opposée à la première face.

Selon une autre caractéristique, un plot d'une première face est disposé en regard d'un plot de la deuxième face opposée.

Selon une autre caractéristique, un plot est un point ou une ligne.

Selon une autre caractéristique, le petit format est défini par un petit contour sensiblement rectangulaire et par une petite épaisseur comprise entre 600 et 700µm, préférentiellement selon un format 4FF, et le grand format est défini par un grand contour sensiblement rectangulaire et par une grande épaisseur comprise entre 680 et 840µm préférentiellement selon un format 1FF, 2FF ou 3FF.

Selon une autre caractéristique, un plot est disposé sensiblement le long des côtés du grand contour, préférentiellement des petits côtés.

Selon une autre caractéristique, l'épaisseur d'un plot, si une seule face de l'adaptateur comprend des plots, ou l'épaisseur cumulée d'un plot d'une première face et d'un plot d'une deuxième face, est comprise entre 10 et 170µm, préférentiellement entre 50 et 130µm, encore préférentiellement entre 80 et 130µm.

L'invention concerne encore un procédé de fabrication d'un tel adaptateur, comprenant les étapes suivantes : fabrication d'une plaque selon une épaisseur sensiblement égale à la petite épaisseur, fabrication d'un rehausseur selon une épaisseur sensiblement égale à la différence entre la grande épaisseur et la petite épaisseur, par dépôt de matière sur la plaque, l'étape de dépôt de matière réalisant au moins un plot, disposé de manière à couvrir les sommets d'un triangle inscrit dans le grand contour et de surface sensiblement maximale, sur une première face de la plaque.

Selon une autre caractéristique, l'étape de dépôt de matière réalise encore au moins un autre plot, disposé de manière à couvrir les sommets d'un triangle inscrit dans le grand contour et de surface sensiblement maximale, sur une deuxième face de la plaque opposée à la première face.

Selon une autre caractéristique, la matière déposée est un vernis durcissable.

Selon une autre caractéristique, le dépôt de matière est réalisé par sérigraphie.

Selon une autre caractéristique, le dépôt de matière est réalisé au moyen d'une buse.

Selon une autre caractéristique, un plot est réalisé par plusieurs dépôts de matière successifs.

L'invention concerne encore une carte de distribution selon la revendication 15. D'autres caractéristiques, détails et avantages de l'invention ressortiront plus clairement de la description détaillée donnée ci-après à titre indicatif en relation avec des dessins sur lesquels :
- la figure 1 présente comparativement différents formats,
- la figure 2 présente une carte à microcircuit disposée dans un adaptateur,
- la figure 3 présente un mode de réalisation d'un adaptateur, en vue perspective,
- la figure 4 présente un premier mode de réalisation de l'adaptateur de la figure 3, en vue coupée, avec des plots sur une seule face,
- la figure 5 présente un deuxième mode de réalisation de l'adaptateur de la figure 3, en vue coupée, avec des plots sur les deux faces,
- les figures 6 et 7 présentent, en vue de face, différentes dispositions de plots,
- la figure 8 présente un mode de réalisation d'une carte de distribution.

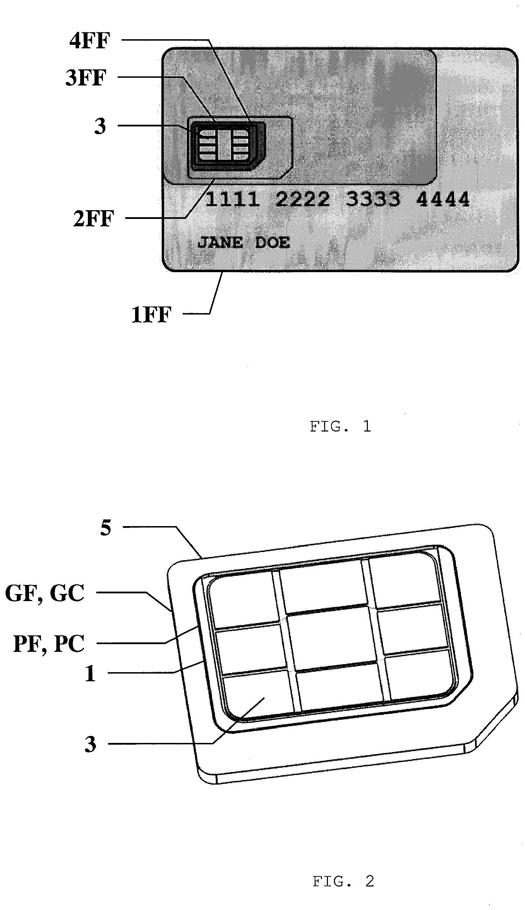

Comme illustré à la figure 1, il existe différents formats de carte à microcircuit 1. Dans tous les cas, une carte à microcircuit 1 est découpée dans une plaque mince sensiblement plane de matériau plastique. Dans tous les formats, une carte à microcircuit comprend sur une de ses faces un connecteur 3 permettant de se connecter avec le microcircuit.

Afin de permettre à une carte à microcircuit de petit format PF d'être utilisée en lieu et place d'une carte à microcircuit de grand format GF, c'est-à-dire d'un format plus grand que le petit format PF, il convient de réaliser un adaptateur 5, apte à venir se placer autour de la carte à microcircuit 1 de manière à la maintenir et à présenter une forme correspondant au grand format GF. Ainsi un tel adaptateur 5 permet de conformer une carte à microcircuit 1 de petit format PF selon un grand format GF. Un ensemble comprenant un adaptateur 5 et une carte à microcircuit 1 de petit format PF, mise en place dans l'adaptateur 5, peut être installé, par exemple dans un lecteur de carte, en lieu et place d'une carte à microcircuit de grand format GF.

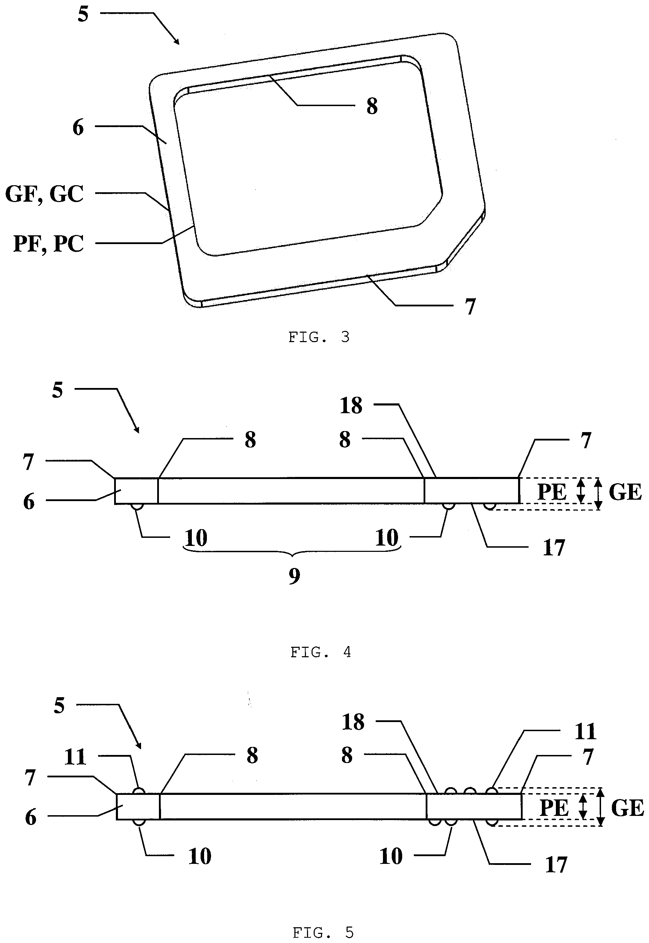

Pour cela, un adaptateur 5, dont un mode de réalisation est figuré aux figures 2 et 3, réalise une transition entre un petit format PF et un grand format GF.

Le petit format PF est un format de carte. Il est ainsi découpé dans une plaque de forme sensiblement plane et d'épaisseur faible au regard de ses autres dimensions, que l'on nomme petite épaisseur PE. L'extension du petit format PF selon le plan de ladite plaque est limitée par un petit contour PC.

Le grand format GF est un format de carte. Il est ainsi découpé dans une plaque de forme sensiblement plane et d'épaisseur faible au regard de ses autres dimensions. Cette épaisseur selon une caractéristique importante est cependant plus grande que l'épaisseur PE du petit format PF. Aussi cette épaisseur est nommée grande épaisseur GE. L'extension du grand format GF selon le plan de ladite plaque est limitée par un grand contour GC. Le petit contour PC est tel qu'il peut s'inscrire dans le grand contour GC.

Afin de permettre une adaptation du petit format PF vers le grand format GF, l'adaptateur 5 comprend une première pièce découpée dans une plaque de forme sensiblement plane et d'épaisseur faible au regard de ses autres dimensions, que l'on nomme plaque 6. L'extension de ladite plaque 6 selon son plan d'extension principale est limitée par une limite externe 7 et par une limite ou découpe interne 8. La limite externe 7 se confond sensiblement avec le grand contour GC du grand format GF. La limite interne 8 se confond sensiblement avec le petit contour PC du petit format PF. Le terme sensiblement comprend ici les tolérances nécessaires à la réalisation et au bon fonctionnement. La limite interne 8 est ainsi complémentaire d'un petit format PF, de manière à pouvoir accueillir de manière maintenue une carte (ou un autre adaptateur) conforme au petit format PF. La limite externe 7 est au contraire conforme à la définition d'un grand format GF, de manière à ce que l'adaptateur 5 puisse se substituer à une carte de grand format GF.

Le positionnement relatif, dans l'adaptateur 5, de la limite interne 8 relativement à la limite externe 7 est déterminé, par d'autres contraintes. Ainsi de manière connue la position du connecteur 3 de la carte à microcircuit 1 est définie relativement au petit contour PC / limite interne 8 par le petit format PF. La définition de la position du connecteur 3 relativement au grand contour GC / limite externe 7 est définie par le grand format GF et permet de déterminer ledit positionnement relatif de la limite interne 8 relativement à la limite externe 7.

La figure 2 présente une carte à microcircuit 1, vue du côté de son connecteur 3, en place dans un adaptateur 5. La carte à microcircuit 1 est d'un petit format PF. Cependant, ainsi équipée d'un adaptateur 5, l'ensemble carte à microcircuit 1 et adaptateur 5 présente les mêmes interfaces dimensionnelles qu'une carte à microcircuit de grand format GF.

Il a été vu, selon une caractéristique importante du problème technique que l'adaptateur 5 est avantageusement réalisé de matière avec la carte à microcircuit 1. La carte à microcircuit 1, conforme au petit format PF, doit présenter une épaisseur égale à la petite épaisseur PE. Aussi, la plaque 6 de l'adaptateur 5 présente avantageusement une épaisseur égale à cette même petite épaisseur PE.

Cependant, l'ensemble comprenant l'adaptateur 5 et la carte à microcircuit 1 de petit format PF, doit être conforme au grand format GF et présenter, au moins partiellement, une épaisseur égale à la grande épaisseur GE.

Pour cela, l'adaptateur 5 comprend encore un rehausseur 9. Ce rehausseur 9 présente une épaisseur sensiblement égale à la différence entre la grande épaisseur GE et la petite épaisseur PE. Le rehausseur 9 est disposé parallèlement à la plaque 6. Ainsi constitué, l'adaptateur 5 présente une épaisseur sensiblement égale à la grande épaisseur GE et est ainsi conforme au grand format GF.

Selon une caractéristique importante de l'invention, contrairement à toutes les réalisations actuelles où le rehausseur 9 couvre toute la surface de la plaque 6 de l'adaptateur 5, soit toute la surface comprise entre le grand contour GC et le petit contour PC, l'invention se propose de réaliser un rehausseur 9 couvrant une surface beaucoup plus réduite.

L'étendue surfacique de l'adaptateur 5 qui doit présenter une épaisseur donnée peut découler de deux sources de contraintes. Une première source est la norme définissant un format de carte. Il convient qu'une carte, et donc un adaptateur 5 qui doit dimensionnellement simuler une carte, se conforme à cette norme.

Une deuxième source est la spécification d'un lecteur destiné à recevoir une carte de ce format. Il convient qu'une carte, et donc un adaptateur 5, puisse être accueilli et maintenu dans un tel lecteur en réalisant le contact avec le connecteur 3 de manière satisfaisante.

Il a été constaté de manière surprenante que la norme définissant les formats de carte définit une épaisseur assortie d'une tolérance, mais reste silencieuse quant à l'étendue surfacique où cette épaisseur doit être effective. Aussi la plupart des exégètes de la norme, ainsi qu'en témoigne les réalisations, ont implicitement considéré que la spécification d'épaisseur s'appliquait à toute la surface de l'adaptateur 5.

La spécification d'un lecteur de carte ne dit rien de plus que la norme du format. Cependant il est constant qu'un lecteur est en interface avec une carte/adaptateur, au moyen de glissières, situées au niveau de la périphérie de la carte 1. C'est donc à minima dans cette zone que l'épaisseur doit être respectée. Il convient de noter encore que ladite interface est réalisée par des glissières. Aussi un plot ponctuel sur une carte/adaptateur peut suffire à simuler une épaisseur, pour peu que ce plot se trouve en regard de la glissière.

Sur cette base, une sur épaisseur peut être efficacement simulée pour toute la surface d'un adaptateur 5, au moyen d'un rehausseur 9 définissant un plan. A minima pour définir un plan d'épaisseur il convient qu'un rehausseur 9 comprenne trois points. Afin d'offrir une bonne « tenue », il est préférable que ces trois points soient disposés aux sommets d'un triangle 25,26. Ainsi, ces trois points ne sont pas alignés. Ledit triangle 25,26 est naturellement inscrit dans le grand contour GC qui constitue le contour extérieur de l'adaptateur 5.

Enfin, ce triangle 25,26 est avantageusement de surface sensiblement maximale. Cette dernière propriété doit être ici comprise de la manière suivante. D'une part, afin de présenter une plus grande surface, le triangle 25,26 est angulairement équilibré, en ce que ses trois angles aux sommets présentent des valeurs proches entre elles et proches d'une valeur moyenne de 60°. Ainsi, à titre indicatif chaque angle au sommet est compris entre 30 et 90°. D'autre part, afin de présenter une plus grande surface, les sommets du triangle 25,26 sont les plus éloignés possibles et tendent ainsi à venir se rapprocher du grand contour GC.

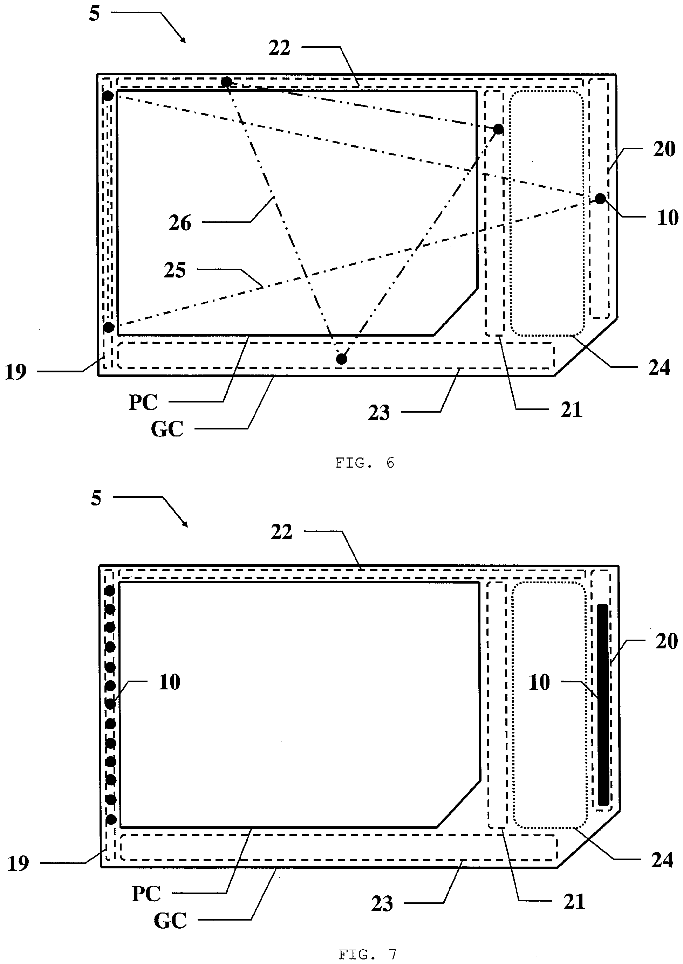

Les figures 6 et 7 montrent un adaptateur 9 en vue de face. Deux exemples de tels triangles 25,26 sont figurés à la figure 6, illustratifs de triangles occupant une surface maximale en restant inscrits dans le grand contour GC.

Le rehausseur 9 est réalisé par dépôt de matière et comprend un ou plusieurs plots 10 déposés sur la plaque 6. Le rehausseur 9 comprend alors au moins un plot 10, disposé de telle manière à couvrir les trois sommets d'un tel triangle 25,26. Le dit au moins un plot 10 peut ainsi comprendre un unique plot linéaire en forme de triangle, ou de V, de manière à couvrir au moins deux côtés du triangle 25,26, ou encore un plot ponctuel sur un sommet et un plot rectiligne sur un côté opposé du triangle 25,26, ou encore trois plots ponctuels sur chacun des trois sommets du triangle 25,26. Ledit au moins un plot 10 est déposé sur une première face 17 de la plaque 6. D'autres plots 10 supplémentaires peuvent encore être ajoutés, en plus dudit au moins un plot couvrant les sommets du triangle 25,26.

Un tel mode de réalisation d'un rehausseur 9, drastiquement limité en surface, est avantageux en ce qu'il consomme nettement moins de matière. Ainsi un dépôt de matière sur toute la surface de l'adaptateur 5 est avantageusement remplacé, par exemple, par un dépôt de trois plots 10 ponctuels.

Il n'est pas nécessaire de placer ledit au moins un plot 10 trop proche d'un des contours PC,GC de l'adaptateur 5. Ces contours PC,GC étant le plus souvent prédécoupés, le dépôt d'un plot 10 pourrait rendre difficile une séparation ultérieure des parties adjacentes à la prédécoupe. Une telle disposition, légèrement à distance tant du grand contour GC que du petit contour PC est encore avantageuse, relativement à l'art antérieur, en ce qu'elle ne nécessite par un positionnement très précis du plot 10/rehausseur 9 relativement à la plaque 6. L'opération de réalisation du rehausseur 9 se trouve ainsi simplifiée en ce qu'un positionnement grossier peut être suffisant et le cas échéant supprimer une opération de réglage machine.

Tel qu'illustré à la figure 4, présentant un adaptateur 5 en vue coupée de profil, ledit au moins un plot 10 est avantageusement disposé sur une face 17, ici par exemple la face inférieure 17, de la plaque 6. Le rehausseur 9 est alors constitué de tous les plots 10 de cette face 17.

Dans une telle configuration, la face 17 accueillant le dit au moins un plot 10, est avantageusement la face 17 opposée à la face 18 portant le connecteur 3 de la carte 1 à microcircuit. Ainsi la face 18 opposée aux plots 10, et avec elle le connecteur 3, est plaquée contre les contacts d'un lecteur accueillant la carte 1 disposée dans l'adaptateur 5.

Cependant ceci n'est pas obligatoire. Il convient en effet de noter que la norme tolère un enfoncement d'au plus 100µm du connecteur 3 relativement à la surface 18 de la carte 1 de laquelle le connecteur 3 affleure. Cette tolérance permet de disposer un plot 11 sur la face 18 où affleure le connecteur 3, pour peu que l'épaisseur du plot 11 reste inférieure à cette tolérance normative de 100µm. Il est ainsi possible de réaliser un rehausseur 9 comprenant au moins un plot 11 uniquement sur la face 18 du connecteur 3.

Selon un autre mode de réalisation, illustré à la figure 5, présentant un adaptateur 5 en vue coupée de profil, il est encore possible, en plus dudit au moins un plot 10 disposé sur la première face 17, de disposer au moins un autre plot 11 sur la deuxième face 18 de la plaque 6 opposée à la première face 17. Pour les mêmes raisons que celles décrites précédemment, ledit au moins un plot 11 est disposé aux sommets d'un triangle 25,26 inscrit dans le grand contour GC et de surface sensiblement maximale. Pour les mêmes raisons normatives que celles décrites précédemment, l'épaisseur d'un plot 11 disposé sur la face 18 du connecteur 3 reste de préférence inférieure à la tolérance de 100µm.

Il est ainsi possible de réaliser un rehausseur 9 comprenant des plots 10,11 sur chacune des faces 17,18 de la plaque 6.

Un avantage d'une telle disposition, avec des plots 10,11 sur chacune des faces 17,18 est de permettre de répartir l'épaisseur du rehausseur 9 entre les plots 10 de la première face 17 et les plots 11 de la deuxième face 18 opposée. Ceci peut s'avérer particulièrement avantageux selon la technologie de dépôt de matière employée, si une limite d'épaisseur de plot existe. Ainsi une telle limite d'épaisseur peut être doublée en réalisant des plots 10,11 sur les deux faces 17,18.

Comme illustré à la figure 5, les plots 10 disposés sur la face 17 sont disposés indépendamment de la disposition des plots 11 disposés sur l'autre face 18. Cependant, afin de ne pas risquer de flexion d'une carte 1 ou d'un adaptateur 5, un plot 10,11 formant pivot, il est avantageux de disposer un plot 10 d'une première face 17 en regard d'un plot 11 d'une deuxième face 18 opposée, et réciproquement. Selon un mode de réalisation préférentiel, la disposition dudit au moins un plot 10 sur la face 17 est identique et superposable avec la disposition dudit au moins un plot 11 sur la face 18 opposée.

La largeur d'un plot 10,11 est sa dimension dans le plan de la plaque 6. Elle correspond à la largeur d'un plot linéaire et au diamètre d'un plot rond/ponctuel. La largeur d'un plot 10,11 est déterminée par la place disponible sur la plaque 6 entre petit contour PC et grand contour GC. Elle est de plus déterminée par la technologie de dépôt employée. La largeur d'un plot 10,11 est un compromis entre une dimension suffisante pour réaliser la fonction de sur épaisseur et une dimension réduite pour économiser de la matière. Il a été observé qu'une valeur de largeur d'un plot 10,11 comprise entre 1 et 3mm, préférentiellement sensiblement égale à 2mm, répond au problème.

Un plot 10,11 peut prendre une forme quelconque. Deux formes particulières sont avantageuses en ce qu'elles sont aisées à mettre en oeuvre. Une première forme, illustrée, à la figure 6, ou encore à la gauche de la figure 7, dans la zone 19, est un point. Cette forme est aisée à réaliser en ce qu'elle nécessite un dépôt ponctuel. La zone 19 comprend une succession alignée de tels points. Une deuxième forme, illustrée à la droite de la figure 7, dans la zone 20 est une ligne ou segment de droite.

Selon un mode de réalisation préféré, le petit format PF est défini par un petit contour PC sensiblement rectangulaire et par une petite épaisseur PE comprise entre 600 et 700µm. Pour un petit contour de 8,8 x 12,3 mm, ceci correspond au format normalisé connu sous le nom de 4FF.

Le grand format GF est défini par un grand contour GC sensiblement rectangulaire et par une grande épaisseur GE comprise entre 680 et 840pm. Pour un grand contour de 54 x 85,6mm, ceci correspond au format normalisé connu sous le nom de 1FF. Pour un grand contour de 15 x 25mm, ceci correspond au format normalisé connu sous le nom de 2FF. Pour un grand contour de 12 x 15mm, ceci correspond au format normalisé connu sous le nom de 3FF. Tous ces formats sont définis par la norme ISO 7816.

Avec de tels contours sensiblement rectangulaires, la configuration est celle des figures 6 et 7. Bien que les plots 10,11 peuvent être disposés n'importe où sur la surface de l'adaptateur 5, soit dans la zone comprise entre le petit contour PC et le grand contour GC, certaines zones sont privilégiées.

Ainsi, afin que les plots 10,11 se retrouve au droit des glissières d'un lecteur de carte, et aussi afin d'écarter les sommets du triangle 25,26, il est préférable que les plots 10,11 soient disposés sensiblement le long des côtés du grand contour GC. Ceci correspond à la périphérie de l'adaptateur 5 et sur les figures 6,7 aux zones 19,20,22 et 23.

Encore préférentiellement, les plots 10,11 peuvent être disposés sensiblement le long des seuls petits côtés du grand contour GC. Ceci correspond aux zones 19 et 20.

Ainsi, à minima, un rehausseur 9 peut comprendre trois plots 10 ponctuels disposés aux sommets du triangle 25, comme illustré à la figure 6. Selon un autre mode de réalisation, un rehausseur 9 peut comprendre, comme illustré à la figure 7, des plots 10 remplissant sensiblement les zones 19 et 20. Pour cela une pluralité de plots 10 ponctuels peut être utilisée, comme illustré pour la zone 19 ou un plot 10 linéaire, comme illustré pour la zone 20.

En référence à la figure 7, les zones 21 et 24 peuvent aussi accueillir au moins un plot 10. La zone 21 est prévue d'être effectivement utilisée, même si un plot 10 disposé dans cette zone réduit légèrement la surface du triangle.

Il peut encore être fait le choix d'épargner certaines zones afin d'intégrer d'autres contraintes. Ainsi, par exemple, une zone telle que la zone 24 peut être épargnée et ne recevoir aucun plot 10. En effet cette zone 24 est préférentiellement utilisée pour placer sur une carte des impressions techniques ou commerciales tel un logo ou un numéro de série. Dans un tel cas il est préférable d'éviter, pour des raisons de visibilité, de disposer, au-dessus d'une telle impression, un ou plusieurs plots 10.

Il apparait à l'évidence, que tous les plots 10,11 disposés sur une même face 17,18 de la plaque 6 présentent sensiblement une même épaisseur, afin de produire une épaisseur de rehausseur 9 sensiblement identique sur toute la surface de l'adaptateur 5 et que l'adaptateur 5 se retrouve parallèle à un plan de pose.

Il convient comme vu précédemment que le rehausseur 9 présente une épaisseur égale à la différence entre la grande épaisseur GE et la petite épaisseur PE. Cette épaisseur est réalisée par l'épaisseur des plots 10,11 déposés.

Si une seule face 17,18 de l'adaptateur 5 accueille des plots 10,11, ceux-ci auront tous une épaisseur sensiblement égale à l'épaisseur du rehausseur 9.

Si les deux faces 17,18 de l'adaptateur 5 accueillent des plots 10,11, les plots 10 d'une face 17 auront tous une épaisseur sensiblement égale à une première épaisseur, et les plots 11 de l'autre face 18 auront tous une épaisseur sensiblement égale à une deuxième épaisseur. La première épaisseur et la deuxième épaisseur sont telles que leur somme soit égale à l'épaisseur du rehausseur 9.

Afin de répondre au problème d'adaptation d'épaisseur entre un format 4FF et les autres formats parmi 1FF, 2FF et 3FF, l'épaisseur de l'adaptateur 9 est comprise entre 10 et 170µm, préférentiellement entre 50 et 130µm, encore préférentiellement entre 80µm et 130µm.

L'invention concerne encore un procédé de fabrication d'un tel adaptateur 5. Un tel procédé comprend les étapes suivantes : fabrication d'une plaque 6 selon une épaisseur sensiblement égale à la petite épaisseur PE, fabrication d'un rehausseur 9 selon une épaisseur sensiblement égale à la différence entre la grande épaisseur GE et la petite épaisseur PE, par dépôt de matière sur la plaque 6, l'étape de dépôt de matière réalisant au moins un plot 10, disposé aux sommets d'un triangle inscrit dans le grand contour GC et de surface sensiblement maximale, sur une face 17 de la plaque 6.

L'étape de fabrication de la plaque 6 comprend toutes les étapes, connues de l'homme du métier, de mise en forme d'un adaptateur 5 et le cas échéant conjointement d'une carte à microcircuit 1, ainsi que les éventuelles découpes ou prédécoupes, qui vont permettre de rendre détachable ledit adaptateur 5 et ladite carte à microcircuit 1.

L'étape de fabrication d'un rehausseur 9 contribue à lui donner une épaisseur sensiblement égale à la différence entre la grande épaisseur GE et la petite épaisseur PE.

Ceci est réalisé par un dépôt de matière sur ladite plaque 6, sous la forme d'un ou plusieurs plots 10,11, avantageusement disposé selon un triangle 25,26 de surface sensiblement maximale. Un tel dépôt peut typiquement mettre en oeuvre une matière liquide ou pâteuse lors du dépôt, et ainsi aisée à déposer, et apte à se solidifier ultérieurement.

Cette matière peut être toute matière apte à être déposée sur une plaque 6 de matière plastique, tel un vernis, une encre ou une résine durcissable. A titre d'exemple il est possible d'employer un matériau polymère, pâteux avant polymérisation, et qui durcit lors de la polymérisation. Le durcissement peut être obtenu en attendant, en chauffant ou encore en exposant le matériau à un rayonnement lumineux.

Un matériau préféré selon l'invention est un vernis polymérisable au moyen d'un éclairage UV, connu sous le nom de vernis « braille » en ce qu'il est initialement prévu pour réaliser des points braille aptes à être déchiffrés par un malvoyant. Un tel vernis « braille » est par exemple commercialisé sous la référence UVLB2 par la société Marabu, sous la référence HGM2003 par la société Dubuit ou encore sous la référence UVRelex par la société VFP.

Le dépôt du matériau en vue de former un plot 10,11 peut être réalisé par toute technique apte à déposer un matériau liquide ou pâteux sur une plaque 6. On peut citer notamment l'utilisation d'une buse ou seringue afin de déposer un plot 10,11. On peut citer encore un procédé sérigraphique employant un masque textile découpé dans les zones où l'on souhaite réaliser un plot 10,11. Ledit masque textile est appliqué sur la plaque 6 et le matériau pâteux est badigeonné sur le masque à l'aide d'un pinceau ou d'un racloir. Le masque est ensuite retiré puis la plaque 6 et le matériau sont insolés. Un tel procédé sérigraphique peut ainsi être mis en oeuvre par une machine offset.

Un avantage de la sérigraphie, pour la résolution du problème, est que cette technique, de par l'utilisation d'un masque textile dont l'épaisseur est calibrée, permet une excellente maitrise de l'épaisseur.

En fonction de la viscosité du matériau pâteux, il peut être nécessaire de réaliser un plot 10,11 en plusieurs dépôts successifs de matière. Ainsi, par exemple, si un matériau pâteux, permet de réaliser une épaisseur maximale de plot de 25µ, et que l'on souhaite réaliser un plot de 100µ d'épaisseur, il convient de réitérer quatre séquences comprenant successivement un dépôt de matériau pâteux, suivi d'un durcissement, en redéposant au même endroit.

En fonction de l'épaisseur nécessaire de rehausseur 9 et si le matériau pâteux envisagé ne permet pas de réaliser un plot 10,11 en une seule passe, il peut être intéressant de réaliser des plots 10 sur une face 17 et d'autres plots 11 sur une face 18 opposée, tel que décrit précédemment.

Quelle que soit la technologie de dépôt envisagée, par buse ou par sérigraphie, le procédé peut être réalisé adaptateur par adaptateur ou sur une planche comprenant une pluralité d'adaptateurs.

L'opération de dépôt de matière réalisant le ou les plots 10,11 formant le rehausseur 9, peut être réalisée à tout stade du procédé de fabrication de l'adaptateur 5. Ainsi par exemple, elle peut être réalisée avant ou après l'étape assurant la mise en place du microcircuit dans la carte.

Selon un mode de réalisation préférentiel, l'opération de dépôt de matière réalisant le ou les plots 10,11 est la dernière opération du procédé. Ceci est avantageux afin de ne pas risquer de mauvais positionnement de l'adaptateur 5 sur une table machine du fait d'un plot 10,11 pouvant faire pivot. De plus ceci est avantageux afin de ne pas risquer, lors d'un transfert d'un poste de fabrication à un autre, qu'un plot 10,11 accroche une aspérité.

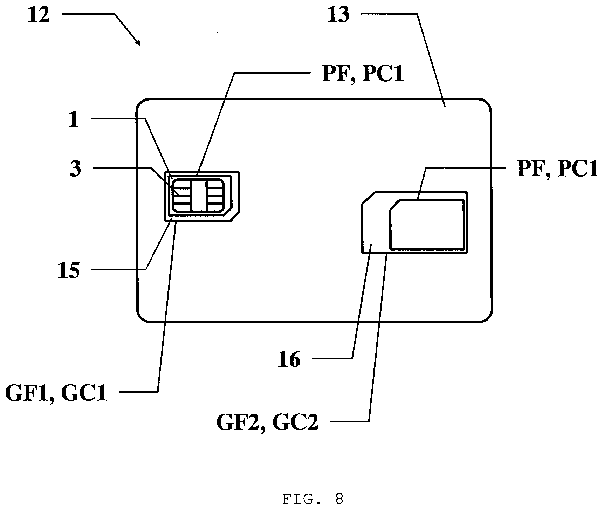

L'invention concerne encore une carte de distribution 12. Un mode de réalisation d'une telle carte de distribution 12 est illustré à la figure 8. Une carte de distribution 12 est une plaque 13 de matériau plastique dans laquelle est disposée au moins une carte à microcircuit 1. La fonction première d'une telle carte de distribution 12 est de permettre au distributeur de livrer un ensemble suffisamment grand pour être manipulé aisément, alors que la carte à microcircuit 1 est de dimensions de plus en plus réduites.

Une carte de distribution 12 comprend ainsi une carte à microcircuit 1 de petit format PF. Cette carte à microcircuit 1 est avantageusement prédécoupée, par toute technique connue de l'homme du métier, afin de pouvoir être simplement détachée de la plaque 13 de la carte de distribution 12, sans outil. Avantageusement, la place disponible sur la carte de distribution 12 est mise à profit pour intégrer tous les moyens utiles à l'utilisation d'une telle carte à microcircuit 1.

Ainsi un premier adaptateur 15 peut être disposé dans la plaque 13. Un tel adaptateur 15 présente un grand contour extérieur GC1 correspondant à un premier grand format GF1. La carte à microcircuit 1 peut avantageusement être disposée dans ledit adaptateur 14/15. De même au moins un deuxième adaptateur 16 peut être disposé dans la plaque 13. Un tel adaptateur 16 présente un grand contour extérieur GC2 correspondant à un deuxième grand format GF2.

Il est important de noter que chacun des adaptateurs 15, 16, comprend un rehausseur 9, et ainsi son au moins un plot 10,11 couvrant les sommets d'un triangle 25,26. Ceci est nécessaire puisque un adaptateur 15,16 peut être utilisé seul. Aussi le plan de pose formé par les trois sommets et donc le rehausseur 9 d'un adaptateur 5 doit être présent.

Chacun des adaptateurs 15,16 est avantageusement prédécoupé afin de pouvoir être aisément détaché de la plaque 13. La plaque 13 elle-même peut aussi former un adaptateur.

Ainsi tel qu'illustré à la figure 8, la carte à microcircuit 1 est au format 4FF. L'adaptateur 15 permet d'adapter d'un format 4FF vers un format 3FF, tant en extension, qu'en épaisseur. L'adaptateur 16 permet d'adapter d'un format 4FF vers un format 2FF, tant en extension, qu'en épaisseur. La plaque 13 permet d'adapter vers un format 1FF.

Ainsi, en fonction du format du lecteur de carte, une même carte de distribution 12 permet de fournir plusieurs formats. Si la carte à microcircuit 1 est détachée seule, en rompant la prédécoupe à la périphérie de la carte à microcircuit 1, elle peut être employée dans un lecteur 4FF. Si la carte à microcircuit 1 est détachée ensemble avec l'adaptateur 15, en rompant la prédécoupe à la périphérie de l'adaptateur 15, sans nécessairement rompre la prédécoupe à la périphérie de la carte à microcircuit 1, ledit ensemble peut être employé dans un lecteur 3FF. Si la carte à microcircuit 1 est détachée seule, en rompant la prédécoupe à la périphérie de la carte à microcircuit 1, que l'adaptateur 16 est détaché en rompant la prédécoupe à la périphérie de l'adaptateur 16, la carte à microcircuit 1 peut être mise en place dans la découpe interne présente dans l'adaptateur 16. L'ensemble comprenant la carte à microcircuit 1 ainsi mise en place et l'adaptateur 16 peut être employé dans un lecteur 2FF. Sans aucune manipulation, la plaque 13 peut être employée directement dans un lecteur 1FF.

Selon un mode de réalisation avantageux, les différents adaptateurs 15,16 sont disposés dans la plaque 13 symétriquement relativement au centre de la plaque 13, de manière à ce que le connecteur 3 de la carte à microcircuit 1 se retrouve positionné à une même position relativement au coin de ladite plaque 13.

Il est encore possible de disposer d'autres adaptateurs dans la place disponible sur la plaque 13.

## Revendications

1. Adaptateur de format permettant de conformer une carte à microcircuit (1) de petit format (PF) selon un grand format (GF), le grand format (GF) présentant une forme sensiblement plane, présentant une grande épaisseur (GE), d'extension selon ledit plan limitée par un grand contour (GC), le petit format (PF) présentant une forme sensiblement plane, présentant une petite épaisseur (PE), inférieure à la grande épaisseur (GE), d'extension selon ledit plan limitée par un petit contour (PC), inscrit dans le grand contour (GC), ledit adaptateur (5) comprenant une plaque (6) sensiblement plane d'extension selon ledit plan limitée par une limite externe (7) sensiblement identique au grand contour (GC) et par une limite interne (8) sensiblement identique au petit contour (PC), ladite plaque (6) présentant une épaisseur sensiblement égale à la petite épaisseur (PE), et l'adaptateur (5) comprenant encore un rehausseur (9) d'épaisseur sensiblement égale à la différence entre la grande épaisseur (GE) et la petite épaisseur (PE), disposé parallèlement à la plaque (6), ***caractérisé en ce que*** le rehausseur (9) comprend au moins un plot (10), disposé de manière à couvrir les sommets d'un triangle (25,26) inscrit dans le grand contour (GC) et de surface sensiblement maximale, sur une première face (17) de la plaque (6).

2. Adaptateur selon la revendication **1,** où ledit au moins un plot (10) est disposé à distance tant du grand contour (GC) que du petit contour (PC).

3. Adaptateur selon l'une quelconque des revendications **1** ou **2,** où le rehausseur (9) comprend encore au moins un autre plot (11), disposé de manière à couvrir les sommets d'un triangle inscrit dans le grand contour (GC) et de surface sensiblement maximale, sur une deuxième face (18) de la plaque (6) opposée à la première face (17).

4. Adaptateur selon la revendication **3,** où un plot (10) d'une première face (17) est disposé en regard d'un plot (11) de la deuxième face (18) opposée.

5. Adaptateur selon l'une quelconque des revendications **1** à **4,** où un plot (10,11) est un point ou une ligne.

6. Adaptateur selon l'une quelconque des revendications **1** à **5,** où le petit format (PF) est défini par un petit contour (PC) sensiblement rectangulaire et par une petite épaisseur (PE) comprise entre 600 et 700µm, préférentiellement selon un format 4FF, et où le grand format (GF) est défini par un grand contour (GC) sensiblement rectangulaire et par une grande épaisseur (GE) comprise entre 680 et 840µm, préférentiellement selon un format 1FF, 2FF ou 3FF.

7. Adaptateur selon la revendication **6,** où un plot (10,11) est disposé sensiblement le long des côtés du grand contour (GC), préférentiellement des petits côtés.

8. Adaptateur selon l'une quelconque des revendications **1** à **7,** où l'épaisseur d'un plot (10,11), si une seule face de l'adaptateur (5) comprend des plots (10,11), ou l'épaisseur cumulée d'un plot (10) d'une première face (17) et d'un plot (11) d'une deuxième face (18), est comprise entre 10 et 170µm, préférentiellement entre 50 et 130µm, encore préférentiellement entre 80 et 130µm.

9. Procédé de fabrication d'un adaptateur (5) selon l'une quelconque des revendications précédentes, comprenant les étapes suivantes :
- fabrication d'une plaque (6) selon une épaisseur sensiblement égale à la petite épaisseur (PE),
- fabrication d'un rehausseur (9) selon une épaisseur sensiblement égale à la différence entre la grande épaisseur (GE) et la petite épaisseur (PE), par dépôt de matière sur la plaque (6), ***caractérisé en ce que*** l'étape de dépôt de matière réalise au moins un plot (10), disposé de manière à couvrir les sommets d'un triangle (25,26) inscrit dans le grand contour (GC) et de surface sensiblement maximale, sur une première face (17) de la plaque (6).

10. Procédé selon la revendication **9,** où l'étape de dépôt de matière réalise encore au moins un autre plot (11), disposé de manière à couvrir les sommets d'un triangle (25,26) inscrit dans le grand contour (GC) et de surface sensiblement maximale, sur une deuxième face (18) de la plaque (6) opposée à la première face (17).

11. Procédé selon l'une quelconque des revendications **9** à **10,** où la matière déposée est un vernis durcissable.

12. Procédé selon l'une quelconque des revendications **9** à **11,** où le dépôt de matière est réalisé par sérigraphie.

13. Procédé selon l'une quelconque des revendications **9** à **11,** où le dépôt de matière est réalisé au moyen d'une buse.

14. Procédé selon l'une quelconque des revendications **9** à **13,** où un plot (10,11) est réalisé par plusieurs dépôts de matière successifs.

15. Carte de distribution comprenant une plaque (13), comprenant une carte à microcircuit (14) prédécoupée selon un petit format (PF), le petit format (PF) présentant une forme sensiblement plane, présentant une petite épaisseur (PE), d'extension limitée par un petit contour (PC), un premier adaptateur (15) selon l'une quelconque des revendications **1** à **8** prédécoupé, permettant de conformer ladite carte à microcircuit (1) selon un premier grand format (GF1), le premier grand format (GF1) présentant une forme sensiblement plane, présentant une première grande épaisseur, supérieure à la petite épaisseur, d'extension limitée par un premier grand contour (GC1), exinscrit au petit contour (PC), au moins un deuxième adaptateur (16) selon l'une quelconque des revendications **1** à **8** prédécoupé permettant de conformer ladite carte à microcircuit (14) selon un deuxième grand format (GF2), le deuxième grand format (GF2) présentant une forme sensiblement plane, présentant une deuxième grande épaisseur, supérieure à la petite épaisseur, d'extension limitée par un deuxième grand contour (GC2), exinscrit au petit contour (PC), ladite plaque (13) présentant une épaisseur sensiblement égale à la petite épaisseur, et chaque adaptateur (15, 16) comprenant encore un rehausseur (9) d'épaisseur sensiblement égale à la différence entre la première, respectivement deuxième, grande épaisseur et la petite épaisseur, disposé parallèlement à la plaque (13).

## Patentansprüche

1. Formatadapter, der ermöglicht, eine Mikroschaltkreiskarte (1) von Kleinformat (PF) an ein Großformat (GF) anzupassen, wobei das Großformat (GF) eine im Wesentlichen ebene Form, die eine großen Dicke (GE) aufweist, mit einer Ausdehnung in der Ebene aufweist, die durch einen großen Umriss (GC) begrenzt ist, wobei das Kleinformat (PF) eine im Wesentlichen ebene Form, die eine geringe Dicke (PE) aufweist, die kleiner als die große Dicke (GE) ist, mit einer Ausdehnung in der Ebene aufweist, die durch einen kleinen Umriss (PC) begrenzt ist, der in den großen Umriss (GC) eingeschrieben ist, wobei der Adapter (5) eine im Wesentlichen ebene Platte (6) aufweist, die sich in der Ebene erstreckt, die durch eine äußere Begrenzung (7), die im Wesentlichen mit dem großen Umriss (GC) identisch ist, und durch eine innere Begrenzung (8) begrenzt ist, die im Wesentlichen mit dem kleinen Umriss (PC) identisch ist, wobei die Platte (6) eine Dicke aufweist, die im Wesentlichen gleich der geringen Dicke (PE) ist, und der Adapter (5) ferner eine Erhöhung (9) von einer Dicke, die im Wesentlichen gleich der Differenz zwischen der großen Dicke (GE) und der geringen Dicke (PE) ist, aufweist, die parallel zur Platte (6) angeordnet ist, **dadurch gekennzeichnet, dass** die Erhöhung (9) mindestens ein Klötzchen (10), das an den Spitzen eines Dreiecks (25, 26) angeordnet ist, das in den großen Umriss (GC) eingeschrieben ist und von im Wesentlichen maximaler Fläche ist, auf einer ersten Seite (17) der Platte (6) aufweist.

2. Adapter gemäß Anspruch 1, wobei das mindestens eine Klötzchen (10) mit Abstand sowohl zu dem großen Umriss (GC) als auch zu dem kleinen Umriss (PC) angeordnet ist.

3. Adapter gemäß einem der Ansprüche 1 oder 2, wobei die Erhöhung (9) ferner mindestens ein anderes Klötzchen (11), das derart angeordnet ist, um die Spitzen eines Dreiecks zu bedecken, das in den großen Umriss (GC) eingeschrieben ist und von im Wesentlichen maximaler Fläche ist, auf einer zweiten Seite (18) der Platte (6), die der ersten Seite (17) gegenüberliegt, aufweist.

4. Adapter gemäß Anspruch 3, wobei ein Klötzchen (10) von einer ersten Seite (17) gegenüber von einem Klötzchen (11) der gegenüberliegenden zweiten Seite (18) angeordnet ist.

5. Adapter gemäß einem der Ansprüche 1 bis 4, wobei ein Klötzchen (10, 11) ein Punkt oder eine Linie ist.

6. Adapter gemäß einem der Ansprüche 1 bis 5, wobei das Kleinformat (PF) durch einen kleinen Umriss (PC), der im Wesentlichen rechteckig ist, und durch eine geringe Dicke (PE), die zwischen 600 und 700 µm beträgt, vorzugsweise in einem 4FF-Format, definiert ist, und wobei das Großformat (GF) durch einen großen Umriss (GC), der im Wesentlichen rechteckig ist, und durch eine große Dicke (GE), die zwischen 680 und 840 µm beträgt, vorzugsweise in einem 1FF-, 2FF- oder 3FF-Format, definiert ist.

7. Adapter gemäß Anspruch 6, wobei ein Klötzchen (10, 11) im Wesentlichen entlang der Seiten des großen Umrisses (GC), vorzugsweise entlang der kleinen Seiten, angeordnet ist.

8. Adapter gemäß einem der Ansprüche 1 bis 7, wobei die Dicke eines Klötzchens (10,11), wenn nur eine Seite des Adapters (5) Klötzchen (10,11) aufweist, oder die kumulative Dicke eines Klötzchens (10) einer ersten Seite (17) und eines Klötzchens (11) einer zweiten Seite (18) zwischen 10 und 170 µm, vorzugsweise zwischen 50 und 130 µm, insbesondere zwischen 80 und 130 µm, beträgt.

9. Verfahren zur Herstellung eines Adapters (5) gemäß einem der vorhergehenden Ansprüche, umfassend die folgenden Schritte:
- Herstellen einer Platte (6) mit einer Dicke, die im Wesentlichen gleich der geringen Dicke (PE) ist,
- Herstellen einer Erhöhung (9) mit einer Dicke, die im Wesentlichen gleich der Differenz zwischen der großen Dicke (GE) und der geringen Dicke (PE) ist, durch Aufbringen von Material auf die Platte (6), **dadurch gekennzeichnet, dass** der Schritt des Aufbringens von Material mindestens ein Klötzchen (10), das derart angeordnet ist, um die Spitzen eines Dreiecks (25, 26), das in den großen Umriss (GC) eingeschrieben ist und von im Wesentlichen maximaler Fläche ist, auf einer ersten Seite (17) der Platte (6) erstellt.

10. Verfahren gemäß Anspruch 9, wobei der Schritt des Aufbringens von Material ferner mindestens ein anderes Klötzchen (11), das derart angeordnet ist, um die Spitzen eines Dreiecks (25, 26), das in den großen Umriss (GC) eingeschrieben ist und von im Wesentlichen maximaler Fläche ist, auf einer zweiten Seite (18) der Platte (6), die der ersten Seite (17) gegenüberliegt, erstellt.

11. Verfahren gemäß einem der Ansprüche 9 bis 10, wobei das aufgetragene Material ein aushärtbarer Lack ist.

12. Verfahren gemäß einem der Ansprüche 9 bis 11, wobei das Aufbringen von Material durch Siebdruck durchgeführt wird.

13. Verfahren gemäß einem der Ansprüche 9 bis 11, wobei das Aufbringen von Material mit Hilfe von einer Düse durchgeführt wird.

14. Verfahren gemäß einem der Ansprüche 9 bis 13, wobei ein Klötzchen (10, 11) durch mehrere aufeinanderfolgende Materialablagerungen hergestellt wird.

15. Verteilungskarte, umfassend eine Platte (13), die eine Mikroschaltkreiskarte (14) aufweist, die in einem Kleinformat (PF) vorgeschnitten ist, wobei das Kleinformat (PF) eine im Wesentlichen ebene Form, die eine geringe Dicke (PE) aufweist, von einer Ausdehnung aufweist, die durch einen kleinen Umriss (PC) begrenzt ist, einen ersten Adapter (15) gemäß einem der Ansprüche 1 bis 8, der vorgeschnitten ist, der ermöglicht, die Mikroschaltkreiskarte (1) in einem ersten Großformat (GF1) auszubilden, wobei das erste Großformat (GF1) eine im Wesentlichen ebene Form, die eine erste große Dicke aufweist, die größer als die erste Dicke ist, von einer Ausdehnung aufweist, die durch einen ersten großen Umriss (GC1) begrenzt ist, der den kleinen Umriss (PC) umschreibt, wobei mindestens ein zweiter Adapter (16) gemäß einem der Ansprüche 1 bis 8, der vorgeschnitten ist, ermöglicht, die Mikroschaltkreiskarte (14) in einem zweiten Großformat (GF2) auszubilden, wobei das zweite Großformat (GF2) eine im Wesentlichen ebene Form, die eine zweite große Dicke aufweist, die größer als die geringe Dicke ist, von einer Ausdehnung aufweist, die durch einen zweiten großen Umriss (GC2) begrenzt ist, der den kleinen Umriss (PC) umschreibt, wobei die Platte (13) eine Dicke aufweist, die im Wesentlichen gleich der geringen Dicke ist, und wobei jeder Adapter (15, 16) ferner eine Erhöhung (9) mit einer Dicke, die im Wesentlichen gleich der Differenz zwischen der ersten bzw. der zweiten großen Dicke und der geringen Dicke ist, die parallel zur Platte (13) angeordnet ist.

## Claims

1. A format adapter allowing a small format (PF) chip card (1) to adapt to a large format (GF), the large format (GF) having a substantially planar shape, having a large thickness (GE), with extension along said plane limited by a large contour (GC), the small format (PF) having a substantially planar shape, having a small thickness (PE), less than the large thickness (GE), with extension along said plane limited by a small contour (PC), inscribed in the large contour (GC), said adapter (5) comprising a substantially planar plate (6) with extension along said plane limited by an external limit (7) substantially identical to the large contour (GC) and by an internal limit (8) substantially identical to the small contour (PC), said plate (6) having a thickness substantially equal to the small thickness (PE) and the adapter (5) also comprising a booster (9) with a thickness substantially equal to the difference between the large thickness (GE) and the small thickness (PE), disposed in parallel with the plate (6), **characterized in that** the booster (9) comprises at least one stud (10), disposed so as to cover the corners of a triangle (25, 26) inscribed in the large contour (GC) and with a substantially maximum surface area, on a first face (17) of the plate (6).

2. The adapter according to claim 1, where said at least one stud (10) is disposed at a distance both from the large contour (GC) and from the small contour (PC).

3. The adapter according to any one of claims 1 or 2, where the booster (9) also comprises at least one other stud (11), disposed so as to cover the corners of a triangle inscribed in the large contour (GC) and with a substantially maximum surface area, on a second face (18) of the plate (6) opposite to the first face (17).

4. Adapter according to claim 3, where the stud (10) of a first face (17) is disposed facing a stud (11) of the second, opposite face (18).

5. The adapter according to any one of claims 1 to 4, where a stud (10, 11) is a point or a line.

6. The adapter according to any one of claims 1 to 5, where the small format (PF) is defined by a substantially rectangular small contour (PC) or by a small thickness (PE) comprised between 600 and 700µm, preferably in a 4FF format, and where the large format (GF) is defined by a substantially rectangular large contour (GC) and by a large thickness (GE) comprised between 680 and 840µm, preferably in a 1FF, 2FF or 3FF format.

7. The adapter according to claim 6, where a stud (10, 11) is disposed substantially along the sides of the large contour (GC), preferably the small sides.

8. The adapter according to any one of claims 1 to 7, where the thickness of a stud (10, 11), if a single face of the adapter (5) comprises studs (10,11) or the cumulative thickness of a stud (10) of a first face (17) and of a stud (11) of a second face (18) is comprised between 10 and 170µm, preferably between 50 and 130µm, more preferably between 80 and 130µm.

9. A method of manufacture of an adapter (5) according to any one of the preceding claims, comprising the following steps:
- manufacture of a plate (6) to a thickness substantially equal to the small thickness (PE),
- manufacture of a booster (9) to a thickness substantially equal to the difference between the large thickness (GE) and the small thickness (PE), by deposit of material on the plate (6), **characterized in that** the step of depositing material creates at least one stud (10), disposed so as to cover the corners of a triangle (25, 26) inscribed in the large contour (GC) and which a substantially maximum surface area, on a first face (17) of the plate (6).

10. The method according to claim 9, where the material deposit step also creates at least one other stud (11), disposed so as to cover the corners of a triangle (25, 26) inscribed in the large contour (GC) and with a substantially maximum surface area, on a second face (18) of the plate (6) opposite to the first face (17).

11. The method according to any one of claims 9 to 10, where the material deposited is hardenable varnish.

12. The method according to any one of claims 9 to 11, where the material deposition is accomplished by silk screening.

13. The method according to any one of claims 9 to 11, where the material deposit is accomplished by means of a nozzle.

14. The method according to any one of claims 9 to 13, where a stud (10, 11) is made by several successive deposits of material.

15. A distribution card comprising a plate (13), comprising a precut chip card (14) in a small format (PF), the small format (PF) having a substantially planar shape, having a small thickness (PE), with extension limited by a small contour (PC), a first precut adapter (15) according to any one of claims 1 to 8, allowing said chip card (1) to adapt to a first large format (GF1), the first large format (GF1) having a substantially planar shape, having a first large thickness, greater than the small thickness, with extension limited by a first large contour (GC1), exregistered on the small contour (PC), at least one precut second adapter (16) according to any one of claims 1 to 8 allowing said chip card (14) to be adapted to a second large format (GF2), the second large format (GF2) having a substantially planar shape, have a second large thickness, greater than the small thickness, with extension limited by a second large contour (GC2), exregistered on the small contour (PC), said plate (13) having a thickness substantially equal to the small thickness, and each adapter (15, 16) also comprising a booster (9) with a thickness substantially equal to the difference between the first, respectively second, large thickness and the small thickness, disposed parallel to the plate (13).
